# EUROPEAN PATENT SPECIFICATION

(11) **EP 3 596 821 B1**
(45) Date of publication and mention of the grant of the patent: **27.04.2022**
(21) Application number: 18716341.5
(22) Date of filing: 12.03.2018
(51) Int. Cl.: H02S 20/32, F24S 30/40

(54) **SINGLE-AXIS SOLAR TRACKER**
EINACHSIGER SONNENFOLGER
SUIVEUR SOLAIRE À AXE UNIQUE

(30) Priority: 13.03.2017 IT 201700027605
(43) Date of publication of application: 22.01.2020
(73) Proprietor: SOLTIGUA S.R.L., 47035 Gambettola (FC) (IT)
(72) Inventor: ORIOLI, Vittorio, 47521 Cesena (FC) (IT); TAPPI, Maurizio, 47521 Cesena (FC) (IT)
(74) Representative: Branca, Emanuela
(86) International application number: PCT/IB2018/051626
(87) International publication number: WO 2018/167643

(56) References cited:
- EP-A2- 2 735 817
- DE-A1- 19 922 795
- DE-A1-102005 012 054
- DE-U1-202015 003 869
- DE-U1-202015 008 493
- FR-A1- 3 028 113
- GB-A- 2 392 234
- US-A- 1 683 266
- US-A1- 2010 058 703
- US-A1- 2015 059 826
- US-A1- 2017 102 168

## Description

### TECHNICAL FIELD

The present invention relates to a single-axis solar tracker.

A single-axis solar tracker is an apparatus that supports one or more photovoltaic panels which can orient such panels in the direction of the sun, by turning them about an axis so that the sun's rays hit the panel or the panels perpendicularly, i.e. with an angle of incidence of about 90° in the plane of rotation of the solar tracker.

The photovoltaic apparatus in question is generally mounted on foundations that may be of different types: embedded poles, screwed poles, blocks of reinforced concrete and the like.

The solar tracker therefore comprises a support structure and the assembly of mounted panels must be rotated about an axis, generally horizontal but sometimes inclined according to the conformation of the ground on which the installation is to be performed. The axis of rotation of the panels coincides with the longitudinal axis of the apparatus, with lengths that exceed 90 metres.

The structure must withstand the forces of atmospheric agents and must maintain good orientation precision towards the sun; a further basic requirement of solar trackers is assembly simplicity and the possibility to correct any positioning errors of the foundations. Furthermore, it is important at the same time to reduce the dimensions of the structure without altering the surface area dedicated to the photovoltaic modules and reduce the strains and deformations of the structure itself during the rotation of the panels, in order to guarantee greater orientation precision.

### PRIOR ART

Various embodiments are known in the prior art, designed to face contrasting requirements.

To minimize imprecisions in movement and, therefore, in the capacity of the tracker to be correctly aligned with respect to the sun's rays, the choice of positioning of the tracker's axis of rotation is important.

Advantageous positions are at or around the centre of gravity of the structure, so as to make the apparatus balanced with respect to the rotation and therefore minimize efforts and torsional deformations during rotation due to the weight itself of the part of the structure in rotation, however in the section of the machine the area around the centre of gravity falls at the position of the panels themselves, and it is therefore impossible to position a rotation pin except by interrupting the succession of the panels.

The need to have a balanced apparatus with respect to the rotation, which leads to interrupting the surface defined by the photovoltaic panels, is therefore in contrast with the need to maximize such surface area, avoiding all types of interruption.

Furthermore, the interruption of the sequence of panels envisaging leaving the functional space for the rotation mechanisms between one panel or between a group of panels and the adjacent panel or group of panels, implies an increase in the overall dimensions of the structure for the same useful area for the installation of photovoltaic modules, with a consequent increase in the costs of the structure due to the higher dimensions and larger area of ground used for the same installed photovoltaic power.

Because of the need to face these contrasting needs in the state of the art, different solutions have been developed, however apparatuses of the known type can be grouped into two macro-categories.

A first category of apparatuses envisages the photovoltaic modules being adjacent to each other, creating a continuous surface, also known as a "board" without interruptions.

This category includes solutions that envisage solar trackers with an axis of rotation placed at or near the centre of gravity of the structure, and trackers with an axis of rotation centred on the beam, but wherein the structure is not however balanced from a torsional point of view (twisting efforts are therefore generated during the rotation of the panels).

A second category of apparatuses envisages instead the photovoltaic modules being grouped into groups of modules (or "boards") with an empty space between one group and another, spaces intended to house elements of the support structure, in particular rotation pins. In this case, the axis of rotation is barycentric, however the surface of the modules undergoes an interruption at the rotation pins.

A further requirement that the solar tracker must satisfy is that of being able to manage the thermal expansions resulting from the heating of the structure itself.

In fact, as mentioned, the structure generally comprises a steel beam consisting of various portions connected to each other to form a structure that can have a longitudinal extension of over 90 metres. In the presence of temperature changes (between day and night, but also between summer and winter) which may even be in the order of 50°C, a steel structure of such dimensions can even vary its total length (by extending/contracting) by about 30 mm on each side. For this reason, thermal expansions must be allowed at the various support points of the longitudinal beam. Solutions of the known type are not free from drawbacks.

In particular, apparatuses belonging to the first macro-category (continuous "board") and with a barycentric position of the axis of rotation, are better from the point of view of the occupation of space (power density) and costs with respect to devices belonging to the second macro-category (groups of "boards"), and have better operating characteristics, i.e. lower deformations and efforts induced by weight during rotation, with respect to continuous "board" devices but with a non-barycentric axis of rotation.

In any case, even the most advantageous solutions represented by continuous "board" solutions with a barycentric position of the axis of rotation are not free from drawbacks.

From a mechanical point of view, the constraint between the beam and the pole is considerable as a hinge in the longitudinal plane of the machine.

The forces that develop on the beam are not contrasted by systems of constraint to the pole of the known type.

This represents a drawback since the aerodynamic forces that develop because of the thrust of the wind on the structure can cause the oscillation of the structure in the perpendicular direction to the photovoltaic modules. If the connection is more rigid, the oscillations are limited, by eliminating or however reducing the need for dynamic dampers.

Furthermore, another drawback that affects solutions of the known type consists of the fact that they are free from any possibility of adjustment against possible "twist" errors.

Since it is difficult to maintain a high level of precision during the realization of foundations and/or while embedding the poles in the ground, the pole must be tilted with respect to the vertical axis Z by an angle known as the "tilt", or rotated about the axis Z, i.e. with the axis of the pole section rotated with respect to the longitudinal axis of the machine ("twist") .

In general, single-axis trackers of the known type have the possibility of adjustment to balance the "tilt" effect.

On the other hand, not all the solutions have the possibility of adjustment to balance the "twist" effect, and in particular, as mentioned, the so-called continuous "board" solutions and those with a barycentric position of the axis of rotation are not equipped with such possibility.

FR 3 028 113 A1 shows a single-axis solar tracker according to the preamble of claim 1.

### SUMMARY OF THE INVENTION

The main task of the present invention is to obviate the drawbacks affecting solutions of the known type. Within this task, it is an object of the present invention to provide a single-axis solar tracker that allows the connection between the support element and the tubular element of the support structure to be made more rigid.

A further object of the present invention is that of providing a single-axis solar tracker that allows a possibility of adjustment of the connection between the support element and the tubular element of the support structure about the vertical axis Z (twist).

Yet another object of the present invention is that of providing a single-axis solar tracker that allows the thermal expansions of the structure to be managed.

It is a further object of the present invention to provide a single-axis solar tracker that allows axial fixing in one point of the tracker, also allowing installation on sloping ground.

This task, as well as these and other objects according to the present invention are achieved by a single-axis solar tracker according to the accompanying claim 1.

Further characteristics of the single-axis solar tracker according to the present invention are the subject matter of the dependent claims.

More in particular, the single-axis solar tracker according to the present invention constitutes a solution in which the axis of rotation of the tracker is positioned at the centre of gravity of the structure itself, so as to make the apparatus balanced with respect to the rotation and therefore minimize the efforts and torsional deformations during rotation due to the weight itself of the part of the structure in rotation even without interrupting the succession of the panels, thus creating a continuous structure.

More specifically, and as will be seen more clearly below, the specific shape of the guide element which is typically, but not necessarily, circular, when appropriately sized, allows the centre of rotation of the rotating part of the photovoltaic tracker to be positioned in proximity to its centre of gravity, without the need to interrupt the continuity of the photovoltaic modules.

The present invention thus solves the opposing requirements to balance the apparatus with respect to the rotation, a need that would lead to the interruption of the surface defined by the photovoltaic panels, with the requirement to maximize such surface area, avoiding all types of interruption.

### LIST OF FIGURES

The characteristics and advantages of the single-axis solar tracker according to the present invention will become more apparent from the following detailed description, provided by way of non-limiting example, with reference to the schematic attached drawings, wherein:
- figure 1 shows an overall perspective view of a single-axis solar tracker;
- figure 2 shows an overall side view of the single-axis solar tracker of Figure 1;
- figure 3A shows a perspective view of the connection means of said single-axis solar tracker;
- figure 3B shows a front view of the connection means of figure 3A;
- figure 4 shows a perspective view of the connection means of said solar tracker in the motorized version;
- figure 5 shows a further perspective view of the motorized connection means of figure 4;
- figure 6A shows a detailed view of the guide rollers integral with the support element which are part of the connection means in the version without twist adjustment;
- figure 6B shows the same detail of figure 6A in the version equipped with twist adjustment;
- figures 7 and 8 show detailed perspective view of the connection means;
- figure 9 shows a front view of the motorized connection means;
- figure 10 shows a perspective view of the connection means only of said single-axis solar tracker according to the present invention;
- figure 11 shows a side view of the connection means of figure 10;
- figures 11D and 11E show sectional views of figure 11 according to planes D-D and E-E respectively;
- figure 12 shows a perspective view from above of the connection means of figure 10;
- figure 13 shows a perspective view of the connection means only of said single-axis solar tracker in accordance with a further embodiment of the present invention;
- figure 14 shows a side view of the connection means of figure 13;
- figures 14D and 14E show sectional views of figure 14 according to planes D-D and E-E, respectively;
- figure 15 shows a perspective view from above of the connection means of figure 13.

### DETAILED DESCRIPTION OF THE INVENTION

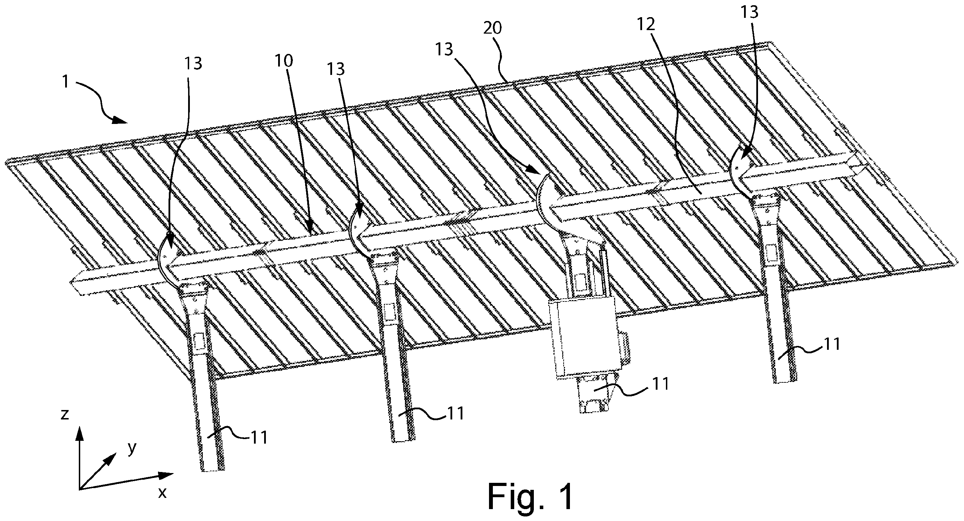

Figure 1 shows a perspective view of a solar tracker Z **1.**

The tracker is of the single-axis type with a prevalently longitudinal extension, the longitudinal axis being indicated with the letter X in the triad of Cartesian axes again visible in figure 1.

The solar tracker **1** comprises a support structure **10** in turn comprising one or more support elements **11** adapted to be constrained to the ground and arranged according to a substantially vertical direction **Z.**

Said support structure **10** further comprises at least one tubular element **12** for supporting one or more photovoltaic panels **20,** said tubular element **12** extending along said longitudinal direction **X** which is substantially parallel to the installation ground.

One or more photovoltaic panels **20** are associated, side-by-side, with said tubular element **12.**

According to a preferred embodiment of the single-axis solar tracker **1,** said photovoltaic panels **20** are adjacent to each other without any break in continuity, defining a continuous surface known as a "board".

The solar tracker **1** further comprises connection means **13** of said tubular element **12** to said one or more support elements **11.** Said connection means **13** are configured to allow the rotation of said tubular element **12** about an axis of rotation substantially parallel to the longitudinal direction **X.**

Said connection means **13** comprise at least one substantially plate-shaped connection element **14** with a half-moon conformation and associated with said tubular element **12,** said connection element **14** comprising in turn at least one guide element **14a** for the rotation of said connection element with respect to the support element **11,** said guide element **14a** defining at least one outer guide surface **14b** having, on the plane in which the connection element **14** lies, a curved profile that follows the half-moon profile of said connection element **14.**

Said outer guide surface **14b** extends, at least for a portion thereof, in a substantially orthogonal direction to the plane in which said plate-shaped connection element **14** lies, projecting orthogonally at least from one side of said plate-shaped connection element.

Said connection means **13** further comprise support and guide means, for example comprising guide rollers **15** or sliding shoes **15d** associated by means of a pair of flanges **11a** with said support element **11.**

More in particular, each of said support elements **11** is, as mentioned, suitable to be stably fixed to the ground at an end thereof, while at the other end they comprise said connection means **13.**

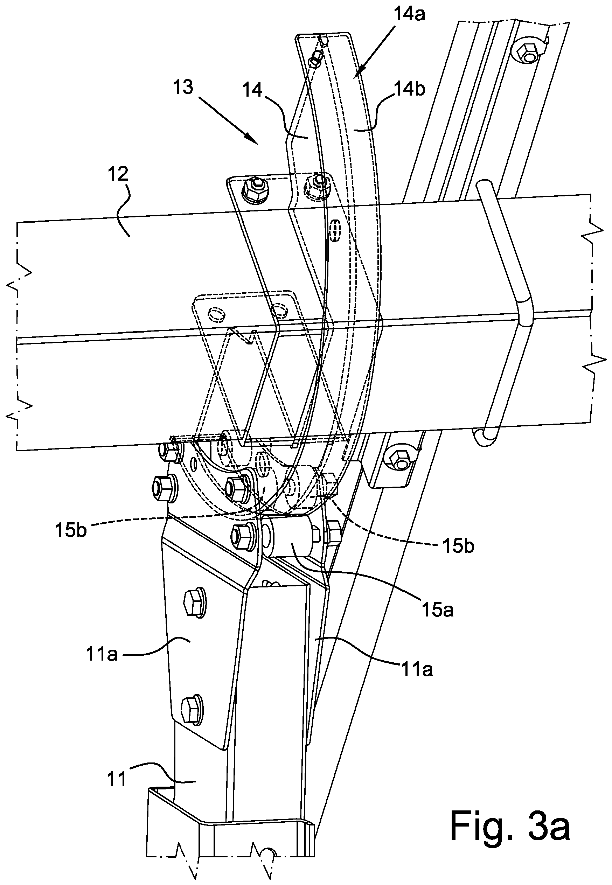

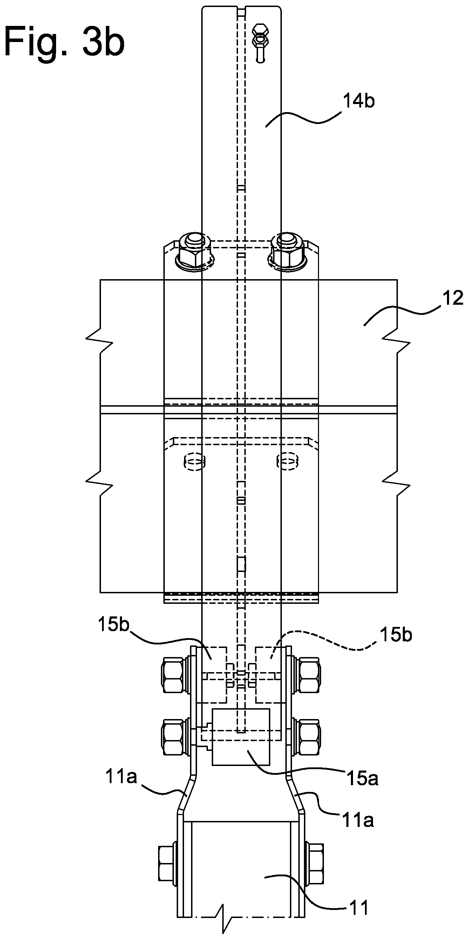

In the preferred embodiment shown in the appended figures, the support elements comprise poles **11** embedded in the ground. With reference to figures 3A and 3B, for example, the head of the pole **11** opposite the end embedded into the ground preferably supports a pair of flanges **11a** constrained to the head of the pole and to which said guide rollers **15** are in turn constrained.

As can be seen more clearly below in the detailed description of the single-axis photovoltaic tracker provided herein by way of non-limiting example, said support and guide means may be configured differently, both in terms of type and dimensions, number and positioning, according to the embodiment of the connection means.

According to a first embodiment of the present invention, said connection means **13** are configured according to what can be seen in figures 3A and 3B, wherein said guide element **14a** of said plate-shaped connection element **14** extends substantially orthogonally to the plane in which said plate-shaped connection element **14** lies.

As mentioned, the plate-shaped connection element **14** lies in one plane, and said guide element **14a** which follows the half-moon profile of the connection element itself projects orthogonally from said plane towards the outside, projecting from both sides of said plate-shaped connection element **14.**

Said guide element **14a** extends in a preferably symmetrical way from said plate-shaped connection element **14.**

Such configuration of the connection means is preferred for the realization of the idle connections between said tubular element **12** and said support elements **11.** In fact, with reference to figure 1, it can be noted how a plurality of support elements **11,** preferably comprising poles, are arranged at regular distances to support said tubular element **12** along the whole of its longitudinal extension.

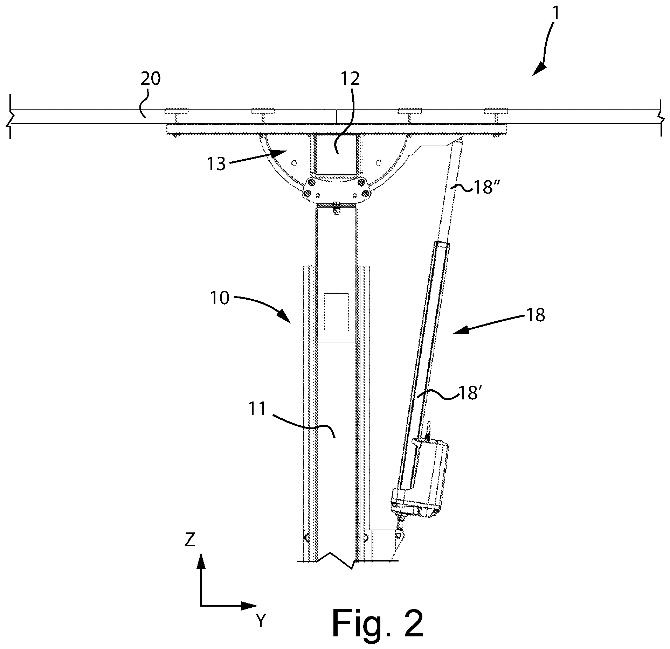

To move, in particular as mentioned to turn, the tubular element **12** about an axis substantially parallel to the longitudinal axis of the structure, advantageously coinciding with the longitudinal axis of the tubular element **12** itself, and thus obtain the rotation of the "board" of photovoltaic panels **20** in the plane **YZ** according to what can be seen for example in figure 2, it is not necessary for all the connection means **13** to be motorized.

It is therefore possible and preferable to use in most of the connections of the tubular element **12** to the support element **11,** connection means **13** comprising a simplified structure, in particular wherein said connection means comprise only one plate-shaped connection element **14** comprising only one guide element **14a** which extends symmetrically orthogonally from said plate-shaped element **14.**

Said guide element **14a** has, on the plane in which the connection element **14** lies, a curved profile that follows the half-moon profile of said connection element **14.**

Said connection means **13** in the non-motorized configuration further comprise guide rollers **15** associated with said support element **11** preferably configured according to what is illustrated, for example, in figures 3A and 3B, wherein said guide rollers **15** are preferably supported by a pair of flanges **11a** for the connection to the support element **11.** According to an embodiment not forming part of the invention the guide rollers comprise at least one lower guide roller **15a** and at least one upper guide roller **15b,** preferably at least one pair of upper rollers **15b** side-by-side on the same axis, where the terms lower and upper refer to the positioning of the rollers with respect to the guide element **14a.**

In even more detail, still with reference to the drawings, it is possible to identify on said guide element **14a** an outer guide surface **14b** and an inner guide surface **14c** which is divided into two parts by the presence of said plate-shaped connection element **14.**

Said at least one lower guide roller **15a** contacts the outer guide surface **14b,** while at least one upper guide roller **15b** contacts the inner guide surface **14c.**

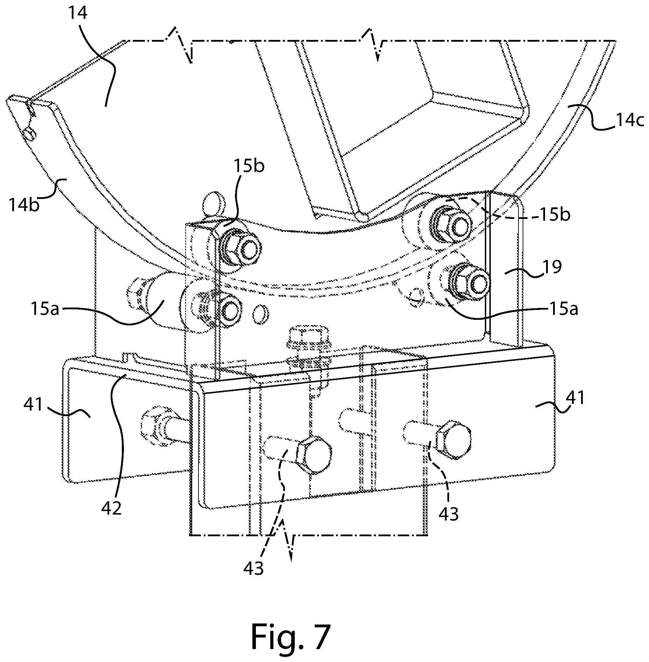

In even more detail, the reference is in particular to the view of figure 7, in this embodiment of the non-motorized connection means non forming part of the invention, the connection means **13** comprise at least one pair of lower rollers **15a** on which said outer guide surface **14b** rests, and opposing two pairs of upper rollers **15b** which rest on said inner guide surface **14c** of said guide element **14a.**

Said guide element **14a** is inserted between said lower rollers **15a** and said upper rollers **15b** thus realizing a rigid constraint that can be likened to a joint in the direction of the tracker axis.

Preferably, each lower roller **15a** is radially opposed to a pair of said upper rollers **15b.**

As mentioned, in the case of a non-motorized connection, two lower rollers **15a** and two pairs of upper rollers **15b** are provided.

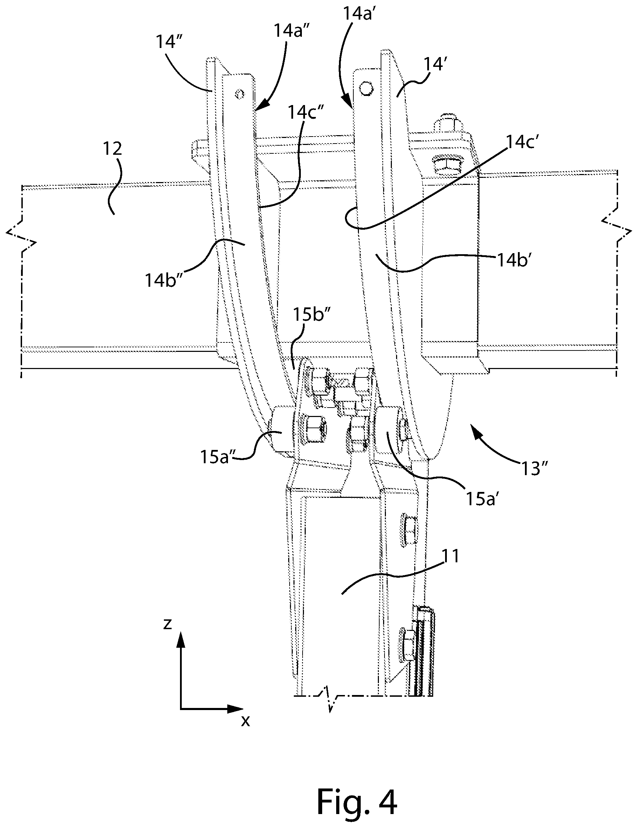

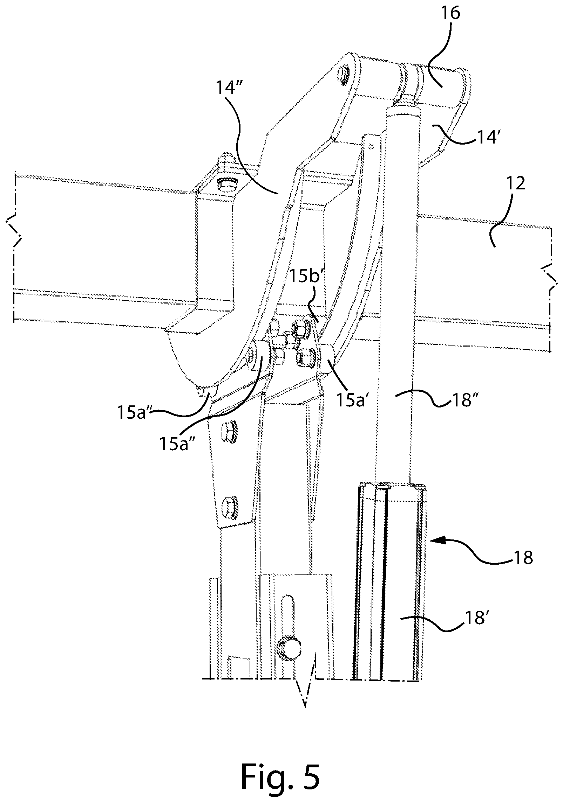

With particular reference to figures 4 and 5, a preferred embodiment of the motorized connection means not forming part of the present invention is now described. In the motorized version, the connection means **13** comprise a pair of plate-shaped connection elements **14', 14"** each comprising a guide element **14a', 14a"** which extends orthogonally from said plate-shaped elements **14', 14".**

In more detail, said connection means **13** in the motorized version, comprise a first **14'** and a second **14"** connection element, with which a first **14a'** and a second **14a"** guide element are respectively associated, each of which extends orthogonally from a respective connection element towards the other connection element, defining the configuration that can be seen in figure 4, wherein the guide rollers **15** and the two guide elements **14a', 14a"** are closed between said first **14'** and second **14"** connection element.

Also in this case, the connection means **13** further comprise guide rollers **15a', 15a"**, **15b', 15b"** associated through a pair of flanges **11a** with said support element **11** and preferably configured according to what is shown for example in figures 4, 6A, 6B and 9, wherein said guide rollers comprise, according to an embodiment not forming part of the invention, at least two pairs of lower guide rollers **15a"**, **15a"** and at least two pairs of upper guide rollers **15b', 15b"** being opposed with respect to a respective guide element **14a'**, **14a".**

More preferably, the connection means **13,** in the case of a motorized configuration, comprise at least one pair of lower guide rollers and at least one pair of upper guide rollers for each of said guide elements of said plate-shaped connection elements.

Said guide rollers comprise a pair of first lower guide rollers **15a'** that support and contact the first outer guide surface **14b'** of said first guide element **14a',** and a pair of first upper guide rollers **15b'** that contact the first inner guide surface **14c'** of said first guide element **14a',** a pair of second lower rollers **15a"** that support and contact the second outer guide surface **14b"** of said second guide element **14a"**, and a pair of second upper rollers **15b"** which contact the second inner guide surface **14c"** of said second guide element **14a".**

In the event of motorized connection means, actuator means **18** are appropriately connected to said connection means **13.**

By way of example, with reference to figure 5, said actuator means **18** may comprise a linear actuator **18'** preferably electric, or alternatively a pneumatic or hydraulic piston, a connection pin **16** or similar device being advantageously provided integrally with at least one of said first **14'** or second **14"** connection elements, for the connection of the free end of the stem **18"** of said piston **18'**, the body of said piston **18'** preferably being connected to the support element **11.**

Preferably, said connection pin **16** is arranged between said first **14'** and second **14"** connection elements.

The movement of the stem **18"** of the piston **18'** causes the rotation, or the rototranslation according to the configuration of the curved profile of said plate-shaped connection elements **14,** of said tubular element **12** substantially about its own longitudinal axis.

In fact, the sliding of said first and second guide elements **14a', 14a"** of said first **14'** and second **14"** plate-shaped connection elements between said lower guide rollers **15a', 15a"** and upper guide rollers **15b', 15b"**, transforms the axial movement of the stem **18"** of the piston **18'** into a rotation movement of the connection elements **14', 14"** and, therefore, of the tubular element **12** to which said connection elements are constrained.

Also in this case, like in the case of non-motorized connection means, the width, i.e. the extension in the longitudinal direction, of the surfaces **14b', 14b"**, **14c'**, **14c"** of the guide elements **14a', 14a"** and the width of the lower rollers **15a', 15a"** on which said guide elements rest, like the presence of the upper guide rollers **15b', 15b"** allow a "two point" coupling, making the coupling itself very stable, and suitable to contrast the "hinge-like" behaviour of solutions of the known type.

Further measures have been studied by the applicant to optimize the possibilities to adjust the positioning of the single-axis solar tracker **1** according to the present invention.

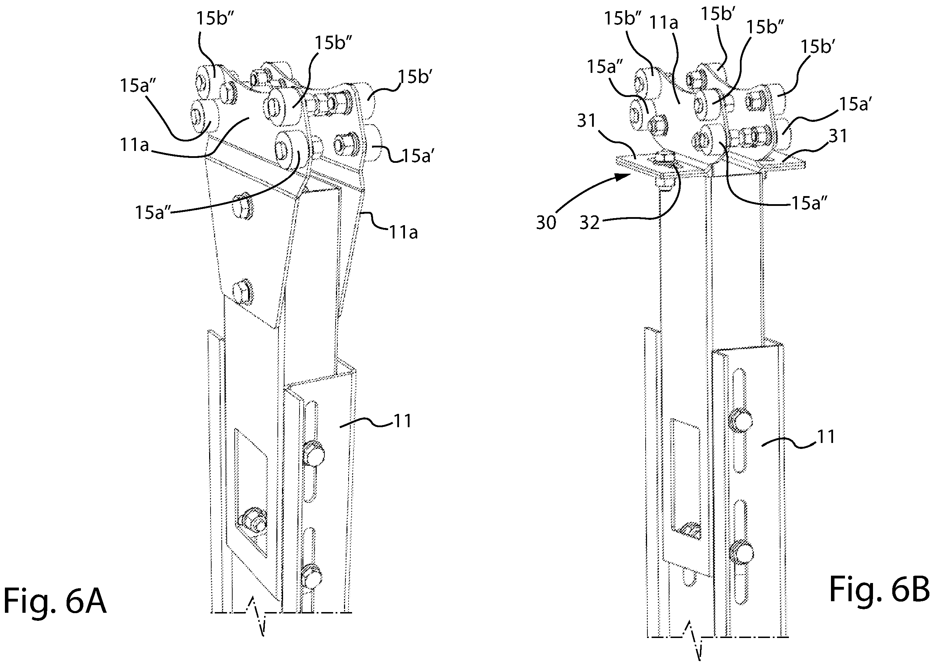

In particular, with reference to figure 6B, "twist" adjustment means **30** are provided, i.e. means for the adjustment of the angular positioning of the support element **11** with respect to the direction identified by the longitudinal axis of the apparatus.

Such twist adjustment means **30** preferably comprise a pair of adjustment flanges **31** integrally associated with said flanges **11a** for supporting the guide rollers **15,** preferably arranged orthogonally to the latter i.e. lying in a substantially horizontal plane.

Each of said adjustment flanges **31** comprises at least one guide groove **32** inside which a screw or a fixing bolt **33** is inserted for the tightening of said adjustment flange **31** to a counter-flange, also substantially horizontal integral with the head of the support element **11.**

Said guide grooves extend parallel to the direction **Y,** substantially orthogonally to the direction **X** parallel to the longitudinal axis of the tubular element **12** when the structure is assembled, so that the flanges **11a** for the support of the guide rollers **15** have an opportunity to adjust both transversely to the structure (direction **y),** and with respect to the rotation about the vertical axis **Z** of the support element **11.**

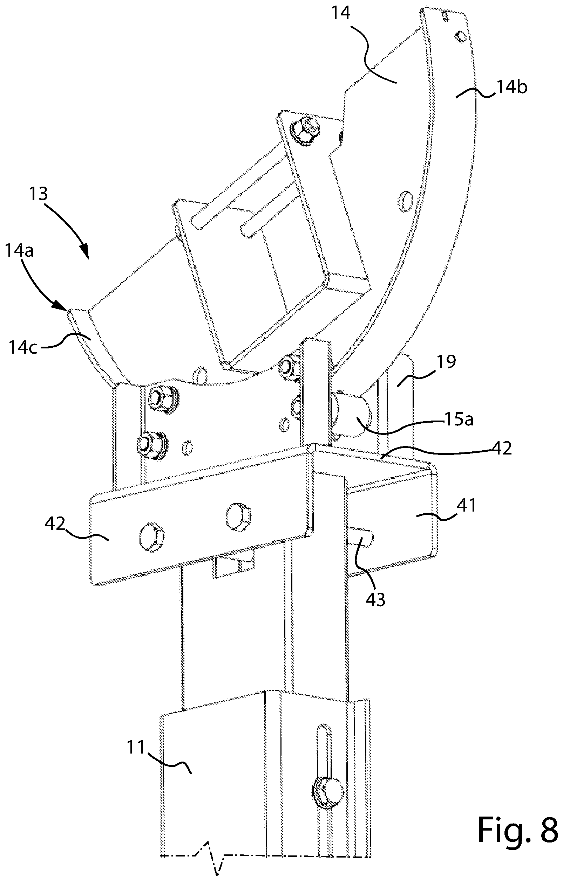

A further adjustment possibility, this time to allow, without contrasting them, the thermal expansions which the structure with a prevalent longitudinal extension encounters mainly in the parallel direction to the longitudinal axis **X,** is shown, for example in figures 7 and 8.

According to the preferred embodiment shown in such figures, the solar tracker **1** according to the present invention therefore comprises, still at said connection means **13,** means for compensating for the thermal expansions preferably comprising a U-shaped flange **40** for the connection of said flanges **11a** for the support of the guide rollers **15** to said support element **11,** said U-shaped flange **40** comprising in turn one pair of parallel surfaces **41** and a connection stretch **42.**

Said U-shaped flange **40** faces downwards, so that between the parallel surfaces **41** of the U-shaped flange **40** the head of said support element **11** is inserted, on which said connection stretch **42** rests.

In this configuration, said parallel surfaces **41** of said U-shaped flange **40** are each provided with a pair of holes, which are aligned with corresponding pairs of holes provided on the head of the support element **11,** so that pins **43** are inserted in such holes in order to be fixed stably to said parallel surfaces **41** of said U-shaped flange and slidable along the longitudinal direction **X** with respect to the holes provided on the support element **11.**

The plate-shaped connection element or elements **14** are thus movable in the longitudinal direction **X** with respect to the support element **11.**

To allow the thermal expansions, at each support element **11** of the single-axis solar tracker **1** the tubular element **12** is therefore free to slide longitudinally, the stroke being exclusively limited by the length of the pins.

In another possible configuration of the single-axis solar tracker the pins **43** can coincide with the assembly pins of the guide rollers **15a,** which guide rollers therefore slide longitudinally integrally with the element **14** (and with the tubular element **12)** during the thermal expansions.

It is therefore necessary to create a fixed point along the structure, both to improve the overall stability of the structure itself, and especially to allow its installation on ground that is not perfectly level.

The fixed point may preferably be created at the centre of the structure, i.e. approximately at the centre of the tubular element **12** with respect to its longitudinal extension.

Therefore, preferably, the fixed point of the structure will be created in the presence of the motorized connection means, which are also preferably provided exclusively at the halfway plane of the tubular element of the structure.

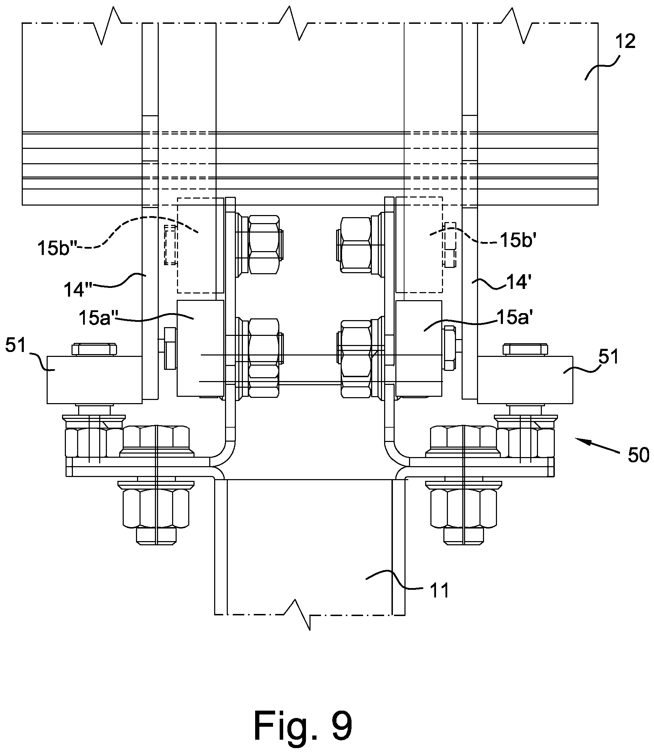

This situation is shown by way of example in figure 9, where connection means in the motorized version are shown provided with means **50** for blocking the axial sliding, comprising at least one pair of blocking rollers **51** preferably supported by said connection flanges **11a** having a substantially vertical axis arranged resting against the outer side surface of each of said plate-shaped connection elements **14', 14"** of said connection means.

The presence of blocking rollers **51** prevents the plate-shaped elements **14', 14"** of the motorized connection means **13** being able to move axially, and therefore the entire tubular element **12** is fixed with respect to the possibility of axial movements.

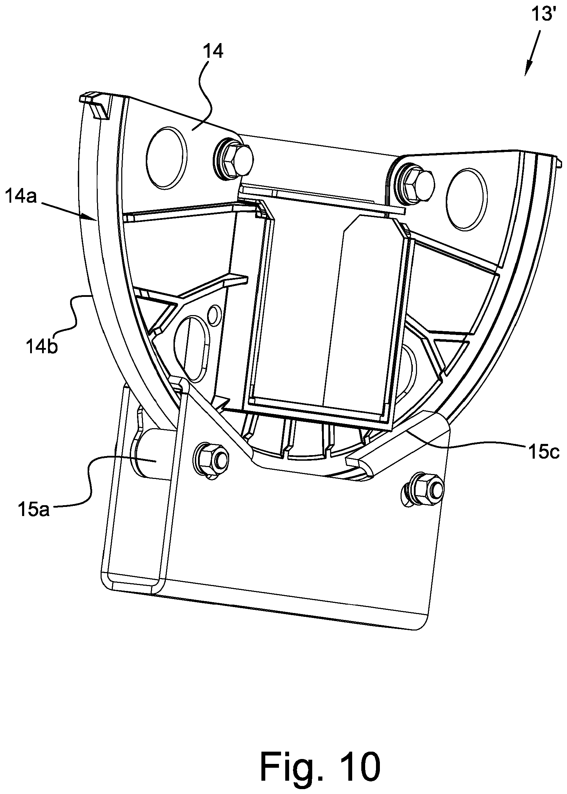

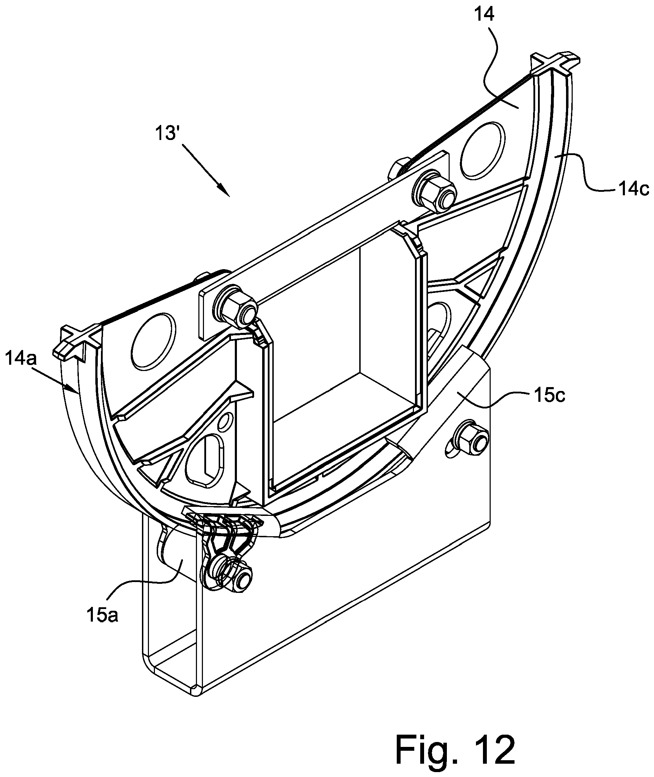

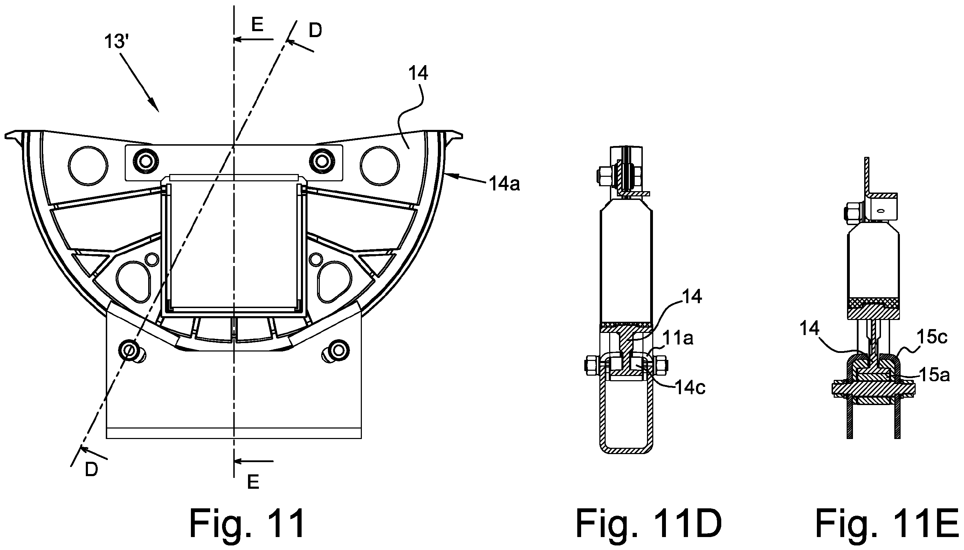

With particular reference to figures 10 to 12, a preferred embodiment of the present invention is now illustrated.

In accordance with such embodiment, the connection means **13'** comprise at least one substantially plate-shaped connection element **14** having a half-moon conformation and that can be associated with said tubular element **12,** not shown, said connection element **14** in turn comprising at least one guide element **14a** for the rotation of said connection element **14** with respect to the support element **11,** said guide element **14a** which extends symmetrically orthogonally from said plate-shaped element **14** defining at least one outer guide surface **14b** having, on the plane in which the connection element lies **14,** a curved profile that follows the half-moon profile of said connection element **14.**

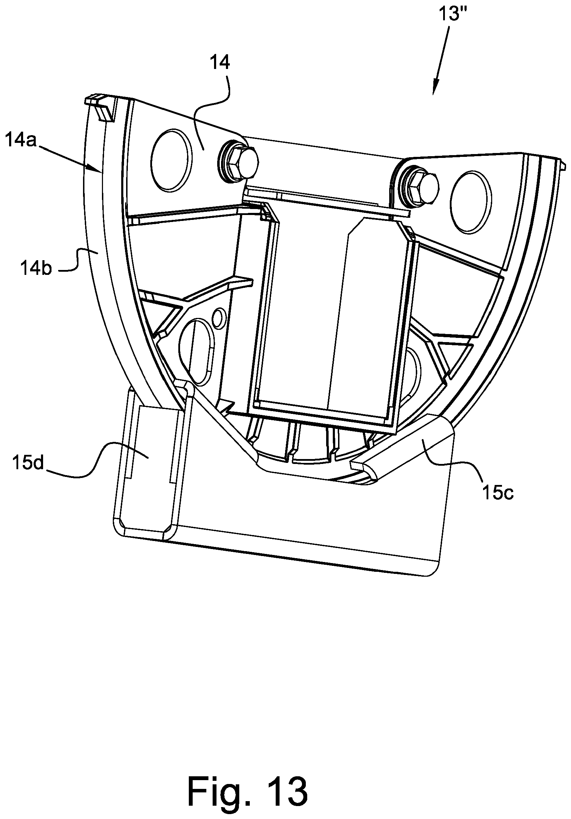

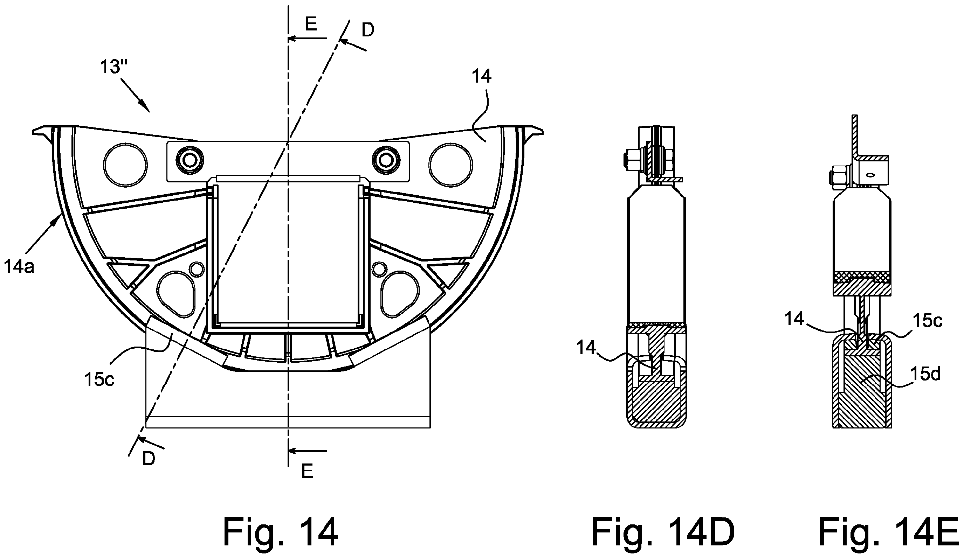

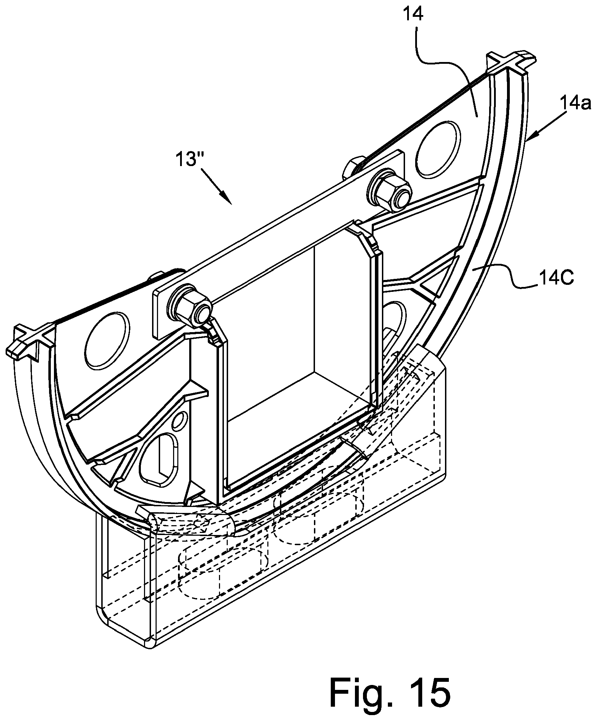

In accordance with this preferred embodiment of the present invention, the connection means **13'** further comprise lower guide rollers **15a** associated with said support element **11** and adapted to abut said outer surface **14b** of said guide element **14a,** whereas with respect to the embodiment illustrated in figure 3A, the upper guide rollers **15b** are replaced by upper sliding shoes **15c** integral with said connection flanges **11a** of said support element **11** and configured to abut on the inner guide surface **14c** of said guide element **14a.** Preferably said upper sliding shoes **15c** are positioned at said lower guide rollers **15a** so that said guide element **14a** is inserted between said lower guide rollers **15a** and said upper sliding shoes **15c.** Similarly, according to an alternative embodiment visible in figures 13 to 15, the connection means **13"** further comprise a substantially plate-shaped connection element **14** having a half-moon conformation and being associable with said tubular element **12,** not shown, said connection element **14** comprising in turn at least one guide element **14a** for the rotation of said connection element **14** with respect to the support element **11.** Also in this case, the guide element **14a** extends orthogonally from said plate-shaped element **14** symmetrically defining an outer guide surface **14b** having, on the plane in which the connection element **14** lies, a curved profile that follows the half-moon profile of said connection element **14,** and an inner surface **14c.**

This further preferred embodiment of the present invention envisages that with respect to the embodiment illustrated in figure 3A not only the upper guide rollers **15b** are replaced by upper sliding shoes **15c,** as in the embodiment shown in figures 10 to 12, but the lower guide rollers are also in this case replaced by lower sliding shoes **15d** configured to abut the outer guide surface **14b** of said guide element **14a.**

Also in these cases, therefore, the same concept already seen to characterize the other embodiments of the present invention shown herein, is referred to again: the presence of opposing pairs of sliding shoes or of sliding shoes opposing rollers allows the use of a guide element 14a that offers an outer resting surface **14b** and an inner resting surface **14c** which have an extension in the orthogonal direction to the plane in which the connection element **14** lies, which allows a more rigid connection to be realized between the tubular element **12** and the support element **11.**

From the description provided up to now, the characteristics of the single-axis solar tracker according to the present invention are clear, as are the relative advantages.

## Claims

1. A single-axis solar tracker (1) comprising a support structure (10) comprising a plurality of support elements (11) adapted to be constrained to the ground and defining a substantially vertical direction (Z) and at least one tubular element (12) for the support of one or more photovoltaic panels (20) placed side-by-side, said tubular element (12) extending along a longitudinal direction (X) substantially parallel to the installation ground, said solar tracker (1) comprising also connection means (13) of said tubular element (12) to said support elements (11) configured to allow the rotation of said tubular element (12) about an axis substantially parallel to the longitudinal direction (X), wherein said connection means (13) comprise at least one substantially plate-shaped connection element (14, 14', 14") associated with said tubular element (12) and support and guide means (15, 15a, 15a', 15a", 15c, 15d) integrally associated with said support element (11), said at least one connection element (14, 14', 14'') comprising in turn at least one guide element (14a, 14a', 14a'') integral with said connection element (14, 14', 14"), said guide element (14a) defining at least one outer guide surface (14b) and at least one inner guide surface (14c) each of which abuts said support and guide means (15, 15a, 15a', 15a", 15c, 15d) said guide element (14a, 14a', 14a") being slidably associated with said support and guide means (15, 15a, 15a', 15a", 15c, 15d), **characterized in that** said guide element (14a, 14a', 14a")comprises at least one stretch extending in direction substantially orthogonal to and projects from the plane on which lies said plate-shaped connection element (14, 14', 14") and **in that** said support and guide means comprise sliding shoes (15c, 15d).

2. A single-axis solar tracker (1) according to the preceding claim, **characterized in that** said at least one guide element (14a, 14a', 14a") has, on the plane on which lies said plate-shaped element, a curved profile.

3. A single-axis solar tracker (1) according to one or more of the preceding claims, **characterized in that** said plate-shaped connection element (14, 14', 14") is crescent-shaped.

4. A single-axis solar tracker (1) according to one or more of the preceding claims, **characterized in that** said at least one guide element (14a) comprises at least one portion which projects orthogonally from both faces of said plate-shaped connection element (14) .

5. A single-axis solar tracker (1) according to the preceding claim, **characterized in that** said one guide element (14a) comprises at least one outer guide surface (14b) and at least one inner guide surface (14c) divided into two parts by said plate-shaped connection element (14).

6. A single-axis solar tracker (1) according to any one of claims 1 to 3, **characterized in that** it comprises a pair of plate-shaped guide elements (14', 14"), each comprising a guide element (14a', 14a") which extends from the respective plate-shaped connection element (14', 14") orthogonally to the plane on which lies said connection element (14', 14").

7. A single-axis solar tracker (1) according to the preceding claim, **characterized in that** said guide elements (14a', 14a") extend from the respective connection elements (14', 14") facing one another, so that said guide elements (14a', 14a") and said guide rollers (15a', 15a",) are enclosed between said connection elements (14', 14").

8. A single-axis solar tracker (1) according to the preceding claim, **characterized in that** it further comprises actuator means (18) comprising a piston (18'), the free end of the rod (18") of said piston (18') being connected to a pin (16) which is integral with at least one of said first (14') or second (14") connection elements.

9. A single-axis solar tracker (1) according to any of claims 1 to 3, **characterized in that** said support and guide means comprise lower sliding rollers (15a) associated with said support element (11) and that abut said outer surface (14b) of said guide element (14a), and upper sliding shoes (15c) integral with connection flanges (11a) of said support element (11) and configured to abut the inner guide surface (14c) of said guide element (14a).

10. A single-axis solar tracker (1) according to any of claims 1 to 3, **characterized in that** said support and guide means comprise upper sliding shoes (15c) in abutment against said inner surface (14c) of said guide element (14a), and lower sliding shoes (15d) in abutment against said outer surface (14b) of said guide element (14a).

11. A single-axis solar tracker (1) according to one or more of the preceding claims, **characterized in that** it further comprises means for adjusting the angular positioning (30) of the support element (11) with respect to the direction identified by the longitudinal axis of the apparatus, i.e. means for adjusting the twist, comprising one pair of adjustment flanges (31) each integrally associated with one of said flanges (11a) for the support of guide rollers (15), preferably arranged orthogonally to the latter, i.e. lying on a substantially horizontal plane, each of said adjustment flanges (31) comprising at least one guide groove (32) in which there is inserted a screw or a fixing bolt (33) for the tightening of said adjustment flange (31) to a counter-flange, it also substantially horizontal integral with the head of the support element (11), said guide grooves extend parallel to the direction (Y), substantially orthogonally to the direction (X) parallel to the longitudinal axis of the tubular element (12) when the structure is assembled, so that the flanges (11a) for the support of the guide rollers (15) have an opportunity to adjust both transversely to the structure direction (y) and with respect to the rotation about the vertical axis (Z) of the support element (11).

12. A single-axis solar tracker (1) according to one or more of the preceding claims, **characterized in that** it further comprises, at said connection means (13), further means for compensating for the thermal expansions comprising a U-shaped flange (40) for the connection of flanges (11a) for the support of guide rollers (15) to said support element (11), said U-shaped flange (40) comprising one pair of parallel surfaces (41), each of said parallel surfaces (41) being provided with holes for the insertion of pins (43) which are fixed stably to said parallel surfaces (41) and slidably along the longitudinal direction (X) with respect to corresponding insertion holes for said pins (43) made on the support element (11).

13. A single-axis solar tracker (1) according to one or more of the preceding claims, **characterized in that** it further comprises means (50) for blocking the axial sliding adapted to prevent axial movements of said plate-shaped connection elements (14', 14"), said blocking means (50) comprising at least one pair of blocking rollers (51) supported by said connection flanges (11a) and having the substantially vertical axes arranged resting against the outer side surface of each of said plate-shaped connection elements (14', 14") of said connection means.

14. A single-axis solar tracker (1) according to one or more of the preceding claims, **characterized in that** the centre of rotation of the rotating part of the photovoltaic tracker is positioned, thanks to the configuration of the connection element (14) and to said guide element (14a), in proximity to its centre of gravity, and **in that** said tracker comprises a plurality of photovoltaic panels (20) that form a continuous surface without interruptions.

## Patentansprüche

1. Einachsiger Sonnenfolger (1), der eine Trägerstruktur (10) umfasst, die eine Vielzahl von Trägerelementen (11) umfasst, die so gestaltet sind, dass sie am Boden befestigt werden können und eine im Wesentlichen vertikale Richtung (Z) definieren, sowie mindestens ein rohrförmiges Element (12) zum Tragen einer oder mehrerer nebeneinander angeordneter Photovoltaikpanele (20), wobei sich das rohrförmige Element (12) entlang einer Längsrichtung (X) im Wesentlichen parallel zum Installationsboden erstreckt, wobei der Sonnenfolger (1) auch Verbindungsmittel (13) des rohrförmigen Elements (12) mit den Trägerelementen (11) umfasst, die so konfiguriert sind, dass sie die Drehung des rohrförmigen Elements (12) um eine Achse ermöglichen, die im Wesentlichen parallel zur Längsrichtung (X) verläuft, wobei die Verbindungsmittel (13) mindestens ein im Wesentlichen plattenförmiges Verbindungselement (14, 14', 14"), das mit dem rohrförmigen Element (12) verbunden ist, und Stütz- und Führungsmittel (15, 15a, 15a', 15a", 15c, 15d), die einstückig mit dem Trägerelement (11) verbunden sind, umfassen, wobei das mindestens eine Verbindungselement (14, 14', 14") seinerseits mindestens ein Führungselement (14a, 14a', 14a") umfasst, das einstückig mit dem Verbindungselement (14, 14', 14") ist, wobei das Führungselement (14a) mindestens eine äußere Führungsfläche (14b) und mindestens eine innere Führungsfläche (14c) definiert, von denen jede gegen die Stütz- und Führungsmitteln (15, 15a, 15a', 15a", 15c, 15d) anliegt, wobei das Führungselement (14a, 14a', 14a") gleitend mit den Stütz- und Führungsmitteln (15, 15a, 15a', 15a", 15c, 15d) verbunden ist, **dadurch gekennzeichnet, dass** das Führungselement (14a, 14a', 14a") mindestens einen Abschnitt aufweist, der sich in einer Richtung im Wesentlichen orthogonal zu der Ebene, auf der das plattenförmige Verbindungselement (14, 14', 14") liegt, erstreckt und von dieser Ebene vorsteht, und dass die Stütz- und Führungsmittel Gleitschuhe (15c, 15d) aufweisen.

2. Einachsiger Sonnenfolger (1) nach dem vorstehenden Anspruch, **dadurch gekennzeichnet, dass** das mindestens eine Führungselement (14a, 14a', 14a") in der Ebene, auf der das plattenförmige Element liegt, ein gekrümmtes Profil aufweist.

3. Einachsiger Sonnenfolger (1) nach einem oder mehreren der vorstehenden Ansprüche, **dadurch gekennzeichnet, dass** das plattenförmige Verbindungselement (14, 14', 14") halbmondförmig ist.

4. Einachsiger Sonnenfolger (1) nach einem oder mehreren der vorstehenden Ansprüche, **dadurch gekennzeichnet, dass** das mindestens eine Führungselement (14a) mindestens einen Abschnitt umfasst, der orthogonal von beiden Flächen des plattenförmigen Verbindungselements (14) vorsteht.

5. Einachsiger Sonnenfolger (1) nach dem vorstehenden Anspruch, **dadurch gekennzeichnet, dass** das eine Führungselement (14a) mindestens eine äußere Führungsfläche (14b) und mindestens eine innere Führungsfläche (14c) umfasst, die durch das plattenförmige Verbindungselement (14) in zwei Teile geteilt ist.

6. Einachsiger Sonnenfolger (1) nach einem der Ansprüche 1 bis 3, **dadurch gekennzeichnet, dass** er ein Paar von plattenförmigen Führungselementen (14', 14") umfasst, die jeweils ein Führungselement (14a', 14a") umfassen, das sich von dem jeweiligen plattenförmigen Verbindungselement (14', 14") orthogonal zu der Ebene erstreckt, auf der das Verbindungselement (14', 14") liegt.

7. Einachsiger Sonnenfolger (1) nach dem vorstehenden Anspruch, **dadurch gekennzeichnet, dass** sich die Führungselemente (14a', 14a") von den jeweiligen Verbindungselementen (14', 14") einander zugewandt erstrecken, so dass die Führungselemente (14a', 14a") und die Führungsrollen (15a', 15a") zwischen den Verbindungselementen (14', 14") eingeschlossen sind.

8. Einachsiger Sonnenfolger (1) nach dem vorstehenden Anspruch, **dadurch gekennzeichnet, dass** er ferner Aktormittel (18) umfasst, die einen Kolben (18') umfassen, wobei das freie Ende der Stange (18") des Kolbens (18') mit einem Stift (16) verbunden ist, der mit mindestens einem der ersten (14') oder zweiten (14") Verbindungselemente einstückig ist.

9. Einachsiger Sonnenfolger (1) nach einem der Ansprüche 1 bis 3, **dadurch gekennzeichnet, dass** die Stütz- und Führungsmittel untere Gleitrollen (15a), die mit dem Trägerelement (11) verbunden sind und an der Außenfläche (14b) des Führungselements (14a) anliegen, und obere Gleitschuhe (15c) umfassen, die mit den Verbindungsflanschen (11a) des Trägerelements (11) einstückig sind und so gestaltet sind, dass sie an der inneren Führungsfläche (14c) des Führungselements (14a) anliegen.

10. Einachsiger Sonnenfolger (1) nach einem der Ansprüche 1 bis 3, **dadurch gekennzeichnet, dass** die Stütz- und Führungsmittel obere Gleitschuhe (15c) umfassen, die gegen die Innenfläche (14c) des Führungselements (14a) anliegen, und untere Gleitschuhe (15d), die gegen die Außenfläche (14b) des Führungselements (14a) anliegen.

11. Einachsiger Sonnenfolger (1) nach einem oder mehreren der vorstehenden Ansprüche, **dadurch gekennzeichnet, dass** er außerdem Mittel zum Einstellen der Winkelpositionierung (30) des Trägerelements (11) in Bezug auf die durch die Längsachse der Vorrichtung festgelegte Richtung, d. h. Mittel zum Einstellen der Verdrehung, umfasst, die ein Paar von Einstellflanschen (31) umfassen, die jeweils einstückig mit einem der Flansche (11a) zum Tragen von Führungsrollen (15) verbunden sind, die vorzugsweise orthogonal zu letzteren angeordnet sind, d. h. auf einer im Wesentlichen horizontalen Ebene liegen, wobei jeder der Einstellflansche (31) mindestens eine Führungsnut (32) umfasst, in die eine Schraube oder ein Befestigungsbolzen (33) zum Festziehen des Einstellflansches (31) an einem Gegenflansch eingesetzt ist, der ebenfalls im Wesentlichen horizontal einstückig mit dem Kopf des Trägerelements (11) ist, wobei sich die Führungsnuten parallel zur Richtung (Y) erstrecken, im Wesentlichen orthogonal zur Richtung (X) parallel zur Längsachse des rohrförmigen Elements (12), wenn die Struktur zusammengebaut ist, so dass die Flansche (11a) zur Abstützung der Führungsrollen (15) die Möglichkeit haben, sich sowohl quer zur Strukturrichtung (y) als auch in Bezug auf die Drehung um die vertikale Achse (Z) des Trägerelements (11) einzustellen.

12. Einachsiger Sonnenfolger (1) nach einem oder mehreren der vorstehenden Ansprüche, **dadurch gekennzeichnet, dass** er ferner an den Verbindungsmitteln (13) weitere Mittel zum Ausgleichen der thermischen Ausdehnungen umfasst, die einen U-förmigen Flansch (40) für die Verbindung von Flanschen (11a) zur Abstützung von Führungsrollen (15) mit dem Trägerelement (11) umfassen, wobei der U-förmige Flansch (40) ein Paar von parallelen Flächen (41) umfasst, wobei jede der parallelen Flächen (41) mit Löchern zum Einsetzen von Stiften (43) versehen ist, die stabil an den parallelen Flächen (41) befestigt und entlang der Längsrichtung (X) in Bezug auf entsprechende Einsetzlöcher für die Stifte (43), die auf dem Trägerelement (11) ausgebildet sind, verschiebbar sind.

13. Einachsiger Sonnenfolger (1) nach einem oder mehreren der vorstehenden Ansprüche, **dadurch gekennzeichnet, dass** er ferner Mittel (50) zum Blockieren des axialen Gleitens umfasst, die geeignet sind, axiale Bewegungen der plattenförmigen Verbindungselemente (14', 14") zu verhindern, wobei die Blockiermittel (50) mindestens ein Paar von Blockierrollen (51) umfassen, die von den Verbindungsflanschen (11a) getragen werden und deren im Wesentlichen vertikale Achsen so angeordnet sind, dass sie an der äußeren Seitenfläche jedes der plattenförmigen Verbindungselemente (14', 14") der Verbindungsmittel anliegen.

14. Einachsiger Sonnenfolger (1) nach einem oder mehreren der vorstehenden Ansprüche, **dadurch gekennzeichnet, dass** der Drehpunkt des rotierenden Teils des Photovoltaik-Sonnenfolgers dank der Konfiguration des Verbindungselements (14) und des Führungselements (14a) in der Nähe seines Schwerpunkts positioniert ist, und dass der Sonnenfolger eine Vielzahl von Photovoltaikpaneelen (20) umfasst, die eine durchgehende Fläche ohne Unterbrechungen bilden.

## Revendications

1. Suiveur solaire à axe unique (1) comprenant une structure de support (10) comprenant une pluralité d'éléments de support (11) adaptés pour être fixés au sol et définissant une direction sensiblement verticale (Z) et au moins un élément tubulaire (12) pour supporter un ou plusieurs panneaux photovoltaïques (20) placés côte à côte, ledit élément tubulaire (12) s'étendant le long d'une direction longitudinale (X) sensiblement parallèle au sol d'installation, ledit suiveur solaire (1) comprenant également un moyen de raccord (13) dudit élément tubulaire (12) aux dits éléments de support (11), configuré pour permettre la rotation dudit élément tubulaire (12) autour d'un axe sensiblement parallèle à la direction longitudinale (X), dans lequel ledit moyen de raccord (13) comprend au moins un élément de connexion sensiblement en forme de plaque (14, 14', 14") associé au dit élément tubulaire (12) et des moyens de support et de guidage (15, 15a, 15a', 15a", 15c, 15d) intégralement associés au dit élément de support (11), ledit au moins un élément de connexion (14, 14', 14") comprenant à son tour au moins un élément de guidage (14a, 14a', 14a") formant une seule pièce avec ledit élément de connexion (14, 14', 14"), ledit élément de guidage (14a) définissant au moins une surface de guidage extérieure (14b) et au moins une surface de guidage intérieure (14c), chacune venant en butée contre lesdits moyens de support et de guidage (15, 15a, 15a', 15a", 15c, 15d), ledit élément de guidage (14a, 14a', 14a") étant associé de manière coulissante aux dits moyens de support et de guidage (15, 15a, 15a', 15a", 15c, 15d), **caractérisé en ce que** ledit élément de guidage (14a, 14a', 14a") comprend au moins un étirement s'étendant dans une direction sensiblement orthogonale au plan sur lequel repose ledit élément de connexion en forme de plaque (14, 14', 14") et faisant saillie depuis celui-ci, et **en ce que** lesdits moyens de support et de guidage comprennent des patins coulissants (15c, 15d).

2. Suiveur solaire à axe unique (1) selon la revendication précédente, **caractérisé en ce que** ledit au moins un élément de guidage (14a, 14a', 14a") a, sur le plan sur lequel repose ledit élément en forme de plaque, un profil incurvé.

3. Suiveur solaire à axe unique (1) selon une ou plusieurs des revendications précédentes, **caractérisé en ce que** ledit élément de connexion en forme de plaque (14, 14', 14") est en forme de croissant.

4. Suiveur solaire à axe unique (1) selon une ou plusieurs des revendications précédentes, **caractérisé en ce que** ledit au moins un élément de guidage (14a) comprend au moins une partie qui fait saillie au plan orthogonal depuis les deux faces dudit élément de connexion en forme de plaque (14).

5. Suiveur solaire à axe unique (1) selon la revendication précédente, **caractérisé en ce que** ledit élément de guidage (14a) comprend au moins une surface de guidage extérieure (14b) et au moins une surface de guidage intérieure (14c) divisée en deux parties par ledit élément de connexion en forme de plaque (14).

6. Suiveur solaire à axe unique (1) selon l'une quelconque des revendications 1 à 3, **caractérisé en ce qu'**il comprend une paire d'éléments de guidage en forme de plaque (14', 14"), chacun comprenant un élément de guidage (14a', 14a") qui s'étend depuis l'élément de connexion en forme de plaque respectif (14', 14") de façon orthogonale par rapport au plan sur lequel repose ledit élément de connexion (14', 14").

7. Suiveur solaire à axe unique (1) selon la revendication précédente, **caractérisé en ce que** lesdits éléments de guidage (14a', 14a") s'étendent depuis les éléments de connexion respectifs (14', 14") se faisant face, de sorte que lesdits éléments de guidage (14a', 14a") et lesdits rouleaux de guidage (15a', 15a") sont enfermés entre lesdits éléments de connexion (14', 14").

8. Suiveur solaire à axe unique (1) selon la revendication précédente, **caractérisé en ce qu'**il comprend en outre des moyens d'actionnement (18) comprenant un piston (18'), l'extrémité libre de la tige (18") dudit piston (18') étant reliée à une broche (16) qui forme une seule pièce avec au moins un des dits premier (14') ou second (14") élément de connexion.

9. Suiveur solaire à axe unique (1) selon l'une quelconque des revendications 1 à 3, **caractérisé en ce que** lesdits moyens de support et de guidage comprennent des galets de glissement inférieurs (15a) associés au dit élément de support (11) et qui viennent en butée contre ladite surface extérieure (14b) dudit élément de guidage (14a), et des patins coulissants supérieurs (15c) formant une seule pièce avec des brides de connexion (11a) dudit élément de support (11) et configurés pour venir en butée contre la surface de guidage intérieure (14c) dudit élément de guidage (14a).

10. Suiveur solaire à axe unique (1) selon l'une quelconque des revendications 1 à 3, **caractérisé en ce que** lesdits moyens de support et de guidage comprennent des patins coulissants supérieurs (15c) en butée contre ladite surface intérieure (14c) dudit élément de guidage (14a), et des patins coulissants inférieurs (15d) en butée contre ladite surface extérieure (14b) dudit élément de guidage (14a).

11. Suiveur solaire à axe unique (1) selon une ou plusieurs des revendications précédentes, **caractérisé en ce qu'**il comprend en outre un moyen de réglage du positionnement angulaire (30) de l'élément de support (11) par rapport à la direction identifiée par l'axe longitudinal de l'appareil, c'est-à-dire un moyen de réglage de la torsion, comprenant une paire de brides de réglage (31), chacune associée solidairement de l'une des dites brides (11a) du support des rouleaux de guidage (15), de préférence disposés de façon orthogonale à ces dernières, c'est-à-dire se trouvant sur un plan sensiblement horizontal, chacune des dites brides de réglage (31) comprenant au moins une rainure de guidage (32) dans laquelle est insérée une vis ou un boulon de fixation (33) pour serrer ladite bride de réglage (31) sur une contre-bride, elle aussi sensiblement horizontale et formant une pièce avec la tête de l'élément de support (11), lesdites rainures de guidage s'étendent de façon parallèle à la direction (Y), sensiblement de façon orthogonale à la direction (X) parallèle à l'axe longitudinal de l'élément tubulaire (12) lorsque la structure est assemblée, de sorte que les brides (11a) du support des rouleaux de guidage (15) ont la possibilité d'être ajustée à la fois transversalement à la direction de la structure (y) et par rapport à la rotation autour de l'axe vertical (Z) de l'élément de support (11).

12. Suiveur solaire à axe unique (1) selon une ou plusieurs des revendications précédentes, **caractérisé en ce qu'**il comprend en outre, au niveau du dit moyen de raccord (13), des moyens supplémentaires pour compenser les dilatations thermiques comprenant une collerette en U (40) raccorder les brides (11a) du support des rouleaux de guidage (15) au dit élément de support (11), ladite collerette en U (40) comprenant une paire de surfaces parallèles (41), chacune des dites surfaces parallèles (41) étant pourvue (40) de trous pour l'insertion de broches (43) qui sont fixées de manière stable aux dites surfaces parallèles (41) et de sorte à coulisser le long de la direction longitudinale (X) par rapport aux trous d'insertion correspondants pour lesdites broches (43) sur l'élément de support (11).

13. Suiveur solaire à axe unique (1) selon une ou plusieurs des revendications précédentes, **caractérisé en ce qu'**il comprend en outre un moyen (50) pour bloquer le coulissement axial adapté pour empêcher les mouvements axiaux des dits éléments de connexion en forme de plaque (14', 14"), lesdits moyens de blocage (50) comprenant au moins une paire de rouleaux de blocage (51) supportés par lesdites brides de connexion (11a) et ayant les axes sensiblement verticaux disposés en appui contre la surface latérale extérieure de chacun des dits éléments de connexion en forme de plaque (14', 14") du dit moyen de connexion.

14. Suiveur solaire (1) à axe unique selon une ou plusieurs des revendications précédentes, **caractérisé en ce que** le centre de rotation de la partie tournante du suiveur photovoltaïque est positionné, grâce à la configuration de l'élément de liaison (14) et au dit élément de guidage (14a), à proximité de son centre de gravité, et **en ce que** ledit suiveur comprend une pluralité de panneaux photovoltaïques (20) qui forment une surface continue sans interruption.
